# EUROPEAN PATENT APPLICATION

(11) **EP 3 381 868 A1**
(43) Date of publication of application: **03.10.2018**
(21) Application number: 17382153.9
(22) Date of filing: 28.03.2017
(51) Int. Cl.: C02F 1/38, B01D 33/21, B01D 33/23, B04B 5/12, B01D 33/56, B01D 29/90, C02F 1/20, C02F 1/24, C02F 1/74

(54) **COMBINED SYSTEM OF FILTERING AND CENTRIFUGAL SEPARATION FOR PURIFYING AQUEOUS FLUIDS AND PROCESS USING SAID SYSTEM**

(71) Applicant: Thersso Water Systems, S.L., 09006 Burgos (ES)
(72) Inventor: GARRIDO SANCHEZ, Julio, 09198 Castrillo del Val-Burgos (ES); PONCELA CALVO, Cesar, 39600 Muriedas Camargo-Cantabria (ES); MADRAZO MARTINEZ, Macarena, 09193 Cortes-Burgos (ES)
(74) Representative: Carvajal y Urquijo, Isabel

(57) **Abstract**

Combined system (1) of filtering and centrifugal separation for purifying an aqueous fluid, comprising: a container (2), filtering elements (4), a feeding tube (11) for the fluid to be purified, an outlet tube (12) for the purified fluid, outlet tubes for solids (15, 13), wherein the container (2) houses the filtering elements (4), a rotational tubular hollow shaft (3), axially passing through said container (2) and supporting the filtering elements (4) through an annular core being provided with channels for the fluid to pass from the filtering elements (4) towards the shaft (3); a spacer (6) located between the filtering elements (4); a rotary seal (7) and bearings (8) which provide the shaft (3) with support, and a purifying process using said combined system (1).

## Description

### Object of the invention

The present invention refers to a combined system of filtering and hydrodynamic cavitation for purifying aqueous fluids, and also to a process using said combined system of filtering and hydrodynamic cavitation.

The present invention can be applied to overall purification of water flows, regardless the degradation condition thereof. For example, urban waste water flows, water flows from industrial processes.

### Background of the invention

The system and process described herein belongs to the field of waste water depuration processes, through a combined action of filtering and centrifugal separation.

On the one hand, filtering is a technique that allows separation of the solids being present in a fluid phase depending on the particle size thereof. In the filtering process, the fluid goes through a porous means, also referred to as filtering element or means, which allows separating the solids which are present in the aqueous phase. This filtering element is held by a filtering support. The liquid-solid separation is performed thanks to the filtering means pores being smaller than the solid particles to be separated. Therefore, the solid particles being retained by the filtering means are extracted through an outlet route, and the purified liquid (filtrate) is obtained through another outlet route.

On the other hand, the centrifugal separation is a technique which allows separating the solids being present at a fluid phase, by means of the centrifugal force action, for which the precipitate is required to be denser than the fluid.

Currently, there are efficient processes for purifying domestic and industrial waste water. However, these processes feature disadvantages: they are not available for a continuous mode processing; they involve high operational costs; these are more complex operations; there is a high generation of residues (sludges), and they feature high power consumption.

Several techniques for purifying water are known in the state of the art, for example: coagulation-flocculation, filtering, centrifugal separation, etc. These techniques have in turn led to different systems for water treatment. There are systems available for water treatment which are prepared for using a single particular technique, or systems being prepared for using a combination of several techniques in order to obtain better results.

A document related to the object of the invention has been found, the Spanish patent application ES2255807A1, which discloses a compact system for waste water filtering by means of centrifugal cavitation. Said system features a reverse tapered configuration, comprising an upper inlet for introducing water tangentially; a lower outlet for the heavy solids being present in waste water; a hollow axis located at the inner central area of the system, provided with orifices for evacuating the filtered fluid, which goes out through an outlet opening located in the upper part of said axis; a filtering element assembly configured for separating solids being present in the fluid, said filtering elements consisting of rotating filtering discs which are integrally fixed to the hollow axis, through which the fluid is urged to pass; and a driving element actuating the axis and the filtering assembly for these to rotate.

Other documents from the state of the art are, for example, WO03012217A1 and CN203061305U, which disclose water treatment equipment having geometrical configurations being similar to that of the system of the invention.

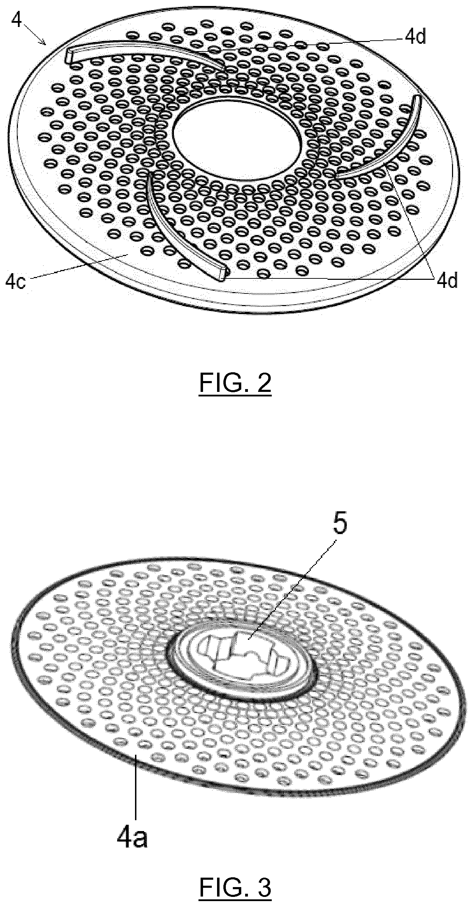

WO03012217A1 discloses a water treatment system by means of centrifugal separation, wherein the water introduction takes place at a part of the equipment where it can be clearly differentiated an upper part having a reverse tapered configuration, and a lower part having a tapered configuration (Figure 3). Here, the water comes in tangentially through the upper part and it initiates a circulating movement through the perimeter of the upper part, in such a way that as the water moves forward, due to said reverse tapered configuration, the circumference perimeter decreases and the water accelerates, the light solids mostly staying at the surface, thus proceeding to separation thereof, while the heavy solids continue towards the lower part for further treatment.

Regarding the manufacture material for the filtering means, reference has been found to water treatment equipment using centrifugal separation which comprise disc-like rotational means, being based on metallic foams technology. For example, in the document US5037562 A (column 4, lines 45-58).

In equipment for water treatment using centrifugal separation, the filtering elements or means are held by supporting cores. Disc-like rotary filters have been found in the state of the art, wherein the filtering means is held by a supporting element; for example, US4224153A (column 2, lines 31-52; Figure 2).

### Description of the invention

The present invention is directed to overcome disadvantages and limitations of filtering and centrifugation apparatus from the prior art. The following disadvantages of the prior art can be mentioned:
- a depressurizing of the container or vessel where the fluid purification takes place;
- a deformation of the filtering elements,
- a poor design of the filtering elements surface, causing the undesirable silting up effect. That is, up to now the outer surface or skin designs of the filtering elements have not achieved really acceptable purification performance and, furthermore, these designs do not meet industrially acceptable availability and cost requirements.

A combined filtering and hydrodynamic cavitation system for purifying aqueous fluids is herein provided which is based on a container or vessel, filtering elements, feeding tubes, purified fluid outlet tubes, electric activating means and other structural means.

There follows a description of the structural elements characterizing the combined system of filtering and hydrodynamic cavitation for purifying aqueous fluids.

The container or vessel is a hollow cylindrical body which is limited, at the upper base and the lower base thereof, by torispherical heads, an upper and a lower one.

Said container is configured for housing therein the structural elements in charge of subjecting the fluid to the filtering and hydrodynamic cavitation processes.

Also, said container is provided with a tangential inlet port for the feeding of the fluid to be purified, and outlet ports for the purified fluid and the solids (heavy and light solids) removed from the fluid.

A rotational tubular hollow shaft or axis axially cross the container between the upper and lower torispherical heads thereof. This shaft or axis is configured for supporting or holding a set of filtering elements and making them rotate, thus allowing the fluid to go into the inner diameter of the shaft from the filtering elements to the outlet tube. When the shaft or axis rotates, by means of an electric driving device, all the filtering elements also rotate integrally.

The filtering elements are coaxially arranged around said tubular shaft and they are configured for filtering the fluid and allowing the pass of it (without solids) therein.

Each filtering element is formed by two filtering discs or plates provided with orifices: an upper disc or plate and a lower disc or plate. Said discs, once assembled to and arranged on the hollow shaft or rotational tubular axis, are faced each other to conform a cavity for accommodating and receiving the filtered fluid through the disc orifices, before going into the shaft.

The surface of each filtering element is covered by a metallic coating, such as a skin, which is provided with orifices or cavities matching the upper and lower disc orifices. Furthermore, the upper face of the metallic coating is provided with some 60° arc-shaped blades, which are radially situated and 120° apart from each other.

An annular supporting core is mounted over the outer diameter of the rotational tubular axis or shaft. Said core is configured for receiving and supporting the filtering elements. Furthermore, the core joins the shaft with the filtering elements.

This annular core is a solid piece being ring-shaped, which is manufactured from a resistant material, for example, polypropylene. The core is provided with some inner channels through which the purified fluid flows from the filtering elements cavity to the rotational tubular axis or shaft. The central hole of the core is adjusted to the diameter of the rotational hollow shaft.

The core also has an upper and lower recess onto which the upper and lower discs are fitted. Around the outer diameter of the rotational hollow shaft and between the filtering elements, a spacer is mounted being configured for keeping the adjoining filtering elements apart along the axis or shaft.

A rotating seal is arranged above the upper torispherical head of the container. This seal is configured for providing tightness to the whole container.

Ball bearings are configured for supporting the rotational tubular shaft. These ball bearings are protected against pressurized fluid flowing in, by means of mechanical locks.

Also, further supporting elements or devices are comprised in the present system:
- a mechanical driving system device which is based on a pulley being coupled to the upper part of the hollow tubular axis or shaft. This pulley is driven by means of a gear motor assembly, which is anchored to the structural support of the cylindrical container of the system and works at a rotational speed between 300 and 500 r.p.m.
- hydraulic pumping device being based on a motor pump group and designed depending on the operational requirements. The purpose thereof is to drive the fluid to be purified, tangentially introducing it into the combined system of the invention at an initial pressure of 14 bars (1.4 MPa) and having a required flow rate according to the configuration being established.
- an air extracting device: when a working cycle starts-up, this device extracts all of the air from the system container or vessel, while it is being filled up with the fluid to be purified. The device is based on a polypropylene cylinder, wherein its lower base or head is provided with an inlet for introducing the fluid to be purified, and its upper base is provided with a non-return air outlet. Near the non-return air outlet, the cylinder houses a fixed wall, which is perpendicular to the axis of the cylinder. This fixed wall has a tapered hole. Inside the cylinder, there is also accommodated a tapered polypropylene body, which at the smallest base thereof is provided with a projection having the same diameter as the smallest diameter of the tapered hole of the fixed wall. Thus, when the tapered body is driven by the flow of fluid to be purified, the projection of the propylene body is received and accommodated into the hole, similar to a tongue and groove lock.

Considering the current equipment and processes, some advantages of the present combined system can be mentioned, for example:
- thanks to the geometrical configuration of the system, a whole separation of the dissolved and suspended solids in the aqueous fluid is achieved and, therefore, a practically full purification, high pollutant removal performance which is kept over time and a highly competitive cost is achieved;
- deformations are not produced in the system structure, taking into account the high pressures being withstood, also thanks to the geometrical configuration of the system (cylindrical container limited by torispherical heads);
- thanks to the rotating seal, a high tightness is provided for all the elements housed by the system container. The support bearings remain protected against pressurized water inflow through mechanical locks.

By comparing with systems of prior art, the following differences can be related:
- the geometrical configuration of the present system, which allows withstanding high working pressures without deformations;
- the present system has a supporting solid core having inner channels for the filtered fluid to pass through and for providing rigidity;
- the system filtering discs, a lower and an upper one, create a cavity where the filtered fluid passes into;
- stainless steel coating or skin having orifices located onto the filtering disc surface and provided with stainless steel and 60° arc-shaped blades, separated from each other 120°;
- the spacer arranged between contiguous filtering elements so as to separate them;
- the system purifies fluid in a continuous way.

The above described system enables the outbreak of the separation physical processes (filtering, centrifugation) according to the combination of pressure pumping, tangential introduction of the fluid to be purified in the system container and rotational movement of the filtering elements being coupled to the rotating shaft.

Furthermore, by combining air feeding through Venturi suction and the presence of blades on the rotating filtering discs, the present system makes it possible for microbubbles or cavities (hydrodynamic cavitation) to be formed and grown, with a particle size in the range of a few microns, in short time intervals (in the range of a few seconds), the collapse of which is used to clean the filtering surface.

When the blades located onto the filtering discs rotate, solid-liquid separation is achieved by means of gravitational acceleration force provided to the fluid. The particles falling within the centrifugal field will tend to move outwards, based on the higher density thereof. The densest ones quickly migrate towards the cylindrical container walls and fall towards the lower torispherical head thereof. However, the least dense particles will be attracted towards the centre of the vortex being generated.

The metallic coatings located onto the filtering discs or plates are intended to avoid boundary layer separation of the fluid to be treated, transforming it from laminar into turbulent, thus forcing the filtering process to be more stable and efficient. A turbulent boundary layer features more energy, and although it causes more friction than a laminar one, it shows higher adherence to the surface, this being the reason why it is preferred to increase friction resistance so as to avoid separation, thus improving the filtering performance.

An additional aspect of the invention refers to a process using the combined filtering and centrifugal cavitation system described above, which is based on continuous measuring the inlet pressures of the fluid to be purified and the corresponding outlet pressures of the purified fluid, and on a control step where the difference between the outlet pressure of the purified fluid (Ps) and the inlet pressure (Pe) of the fluid by means of a control device.

The purpose of said continuous measuring, depending on the characteristics of the fluid to be treated, is to implement the required actions or countermeasures for forced cleaning of the filtering elements by means of an automatic control.

Thus, in the control step, when the pressure difference between the inlet pressure of the fluid to be treated and the outlet pressure of the purified outflowing fluid exceeds a pre-established value, the filtering elements cleaning process is activated.

In order to perform a forced cleaning of the filtering elements, a hydro-pneumatic accumulator which automatically operates at a 14 bar pressure (1,4 MPa) and injects a mixture of air and water in the outlet static tube; and controllably closing through pilot-operated valves, both the heavy and the light solids outlets and the purified fluid outlets, until to the restoration of the pre-established pressure difference value.

For a correct working of the purifying process, there is a step which is activated before starting each purification cycle and when the container with the fluid to be purified is becoming filled, by means of a mechanism in charge of extracting all the air within the container. Thus, the filling volume of the container is maximized and the working pressure will cause the pressure therein to be completely hydrostatic and uniform throughout all the fluid.

The forced cleaning of the filtering elements, which automatically and controllably acts, is activated, if the pressure difference between the fluid to be purified inlet and the purified fluid outlet is higher than an established value, in this case, a value of 12 bars (1,2 MPa).

The process based on the combined filtering and centrifugal cavitation system described above guarantees a continuous outflow of purified water.

### Description of the figures

Figure 1 represents a front view of the combined system of the invention.
Figure 2 represents a perspective view of a filtering element of the system.
Figure 3 represents a perspective view of the upper filtering disc.
Figure 4 represents a perspective view of the lower filtering disc.
Figure 5 represents a diagram of the sub-process of forced cleaning of the filtering elements.

### Example 1:

The system (1) is based on a container or vessel (2) of stainless steel, such as a hollow cylindrical prism, which houses the structural components in charge of subjecting the fluid to the filtering and hydrodynamic cavitation processes. Said container is a hollow body limited above and below by torispherical heads, an upper one (2a) and a lower one (2b).

The container (2) is axially crossed by a rotational and hollow tubular shaft (3), which is configured for fastening or holding the filtering elements (4) and, at the same time, for making said elements rotate. The filtered or purified fluid passes through the inner diameter of the shaft (3) from the filtering elements (4) to the outlet tube (12) for the purified fluid to come out.

Here, the shaft supports 12 filtering elements and a working pressure of 14 bars (1,4 MPa) and a maximum flow of purified water of 30 m3/h flows therethrough. In other embodiment, the shaft supports 24 filtering elements and there is a working pressure of 14 bars.

Each filtering element (4) is in charge of filtering the fluid that is fed to the system (1) and rejecting the solids present in the fluid. As shown in figures 2 and 3, a filtering element (4) is formed by two filtering discs: a lower disc (4a) and an upper disc (4b). When the filtering elements (4) are assembled, the discs (4a and 4b) are faced each other and conform a cavity, towards which the filtered fluid goes through. The discs (4a) and (4b) are coaxially placed around the shaft (3), which holds them, and rotate whenever the shaft rotates.

The surface of a filtering disc is covered by a metallic coating (4c), which is provided with semi spherical cavities. Said coating (4c) avoids the separation of the boundary layer of the fluid to be treated, transforming it from laminar into turbulent, thus forcing the filtering process to be more stable and efficient. A turbulent boundary layer requires more energy and, although it causes more friction than a laminar one, shows a higher adherence to the surface, this being the reason why it is preferred to increase the friction resistance so as to avoid separation, thus improving the filtering performance.

The coating (4c) is provided, at the upper face thereof, with stainless steel blades (4d). These blades are 60° arcs, being separated at a 120° angle. When the filtering elements rotate, the rotational movement of the blades cause the particle separation by means of a gravitational acceleration force which is achieved thanks to the fast rotation thereof and to the fluid to be treated being injected tangentially. The particles falling within the centrifugal field will tend to move outwards, depending on their higher density. The heaviest ones quickly migrate towards the walls of the cylindrical container and, subsequently, are forced to fall into the conical wall. However, the smallest particles will be attracted inwards by the fluid, as they move towards the centre of the vortex being generated.

Around the outer diameter of the shaft (3), an annular supporting core (5) is arranged which is configured for supporting and holding the filtering elements (4) and for these to be attached to the shaft (3). The core (5) is a solid, massive part, made of polypropylene, and constitutes the link between the shaft (3) and the filtering elements (4). Thus, when the shaft rotates, the filtering elements also rotate. There is one supporting core per filtering element. The core (5) has inner channels (5a) through which the fluid coming from the cavity formed by the filtering discs circulates towards the inner area of the shaft (3), and from here it travels towards the outlet tube (12) for the purified fluid.

A spacer (6) is mounted around the outer diameter of the shaft (3) and placed between the adjoining filtering elements (4), to keep them separated. Said spacer is also configured for avoiding solid particle deposition. A rotary seal (7), which provides tightness to the container (2), is arranged above the upper torispherical head of the container.

There are some bearings (8) arranged which provide a supporting or resting basis to the shaft (3) both at the lower and at the upper base thereof. A ball bearing (8a) is also arranged at the lower torispherical head (2b) for providing the shaft (3) with support.

### Example 2:

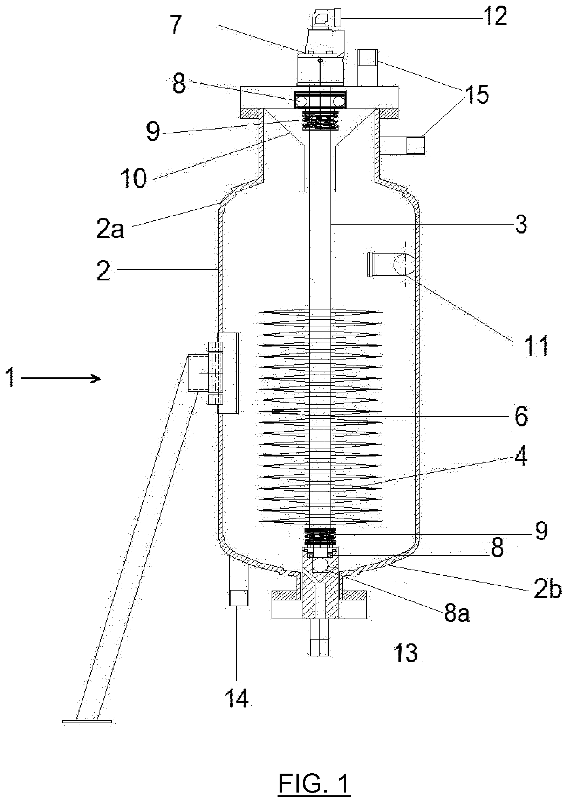

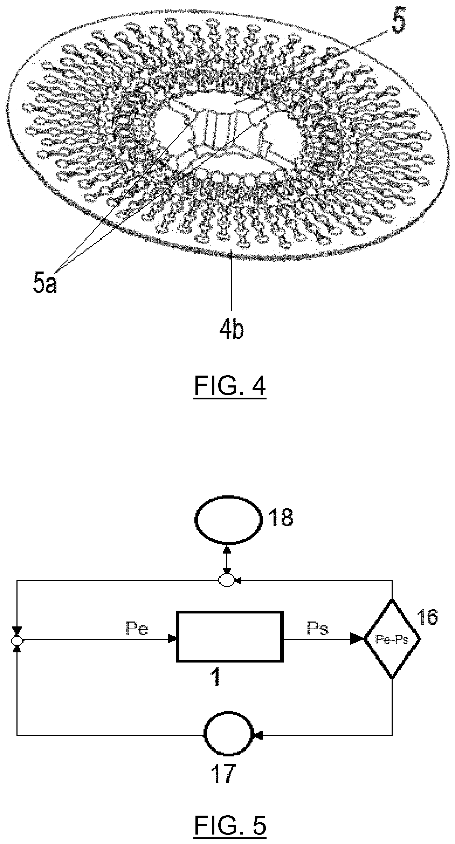

A process for purifying an aqueous fluid is described below by employing the system of example 1 and considering the figures 1 and 4.

The fluid to be purified is tangentially introduced in the system (1) through a feeding tube (11) situated at the upper side of the cylindrical container or vessel (2).

Before introducing the fluid into the system, a step of injecting air and/or additives over the fluid can be carried out so as to improve the performance of the system by means of the formation of floccules or flotation of the existing particles.

Similarly, before starting the operation of the system, a preliminary step of extracting the air from the container (2) is carried out. In this case, the extraction device is activated.

Once the aqueous fluid is inside the system (1), the combination of the effects due to the pressure pumping, the tangential introduction of the fluid into the cylindrical container (2) and the constant rotation of the filtering elements (4) coupled to the shaft (3), trigger the filtration and centrifugation processes, as well a complementary physical process: the controlled hydrodynamic cavitation, which avoids silting up of the filtering surfaces.

In this process, on the one hand, the light solids (less dense solids) are evacuated through the upper side (15) and the heavy solids, that is, the densest ones, come out through the lower outlet tube (13) of the container (2). On the other hand, the fluid will pass through the orifices of the filtering elements (4) being constantly rotating due to the shaft (3) rotation. The purified water flows towards the outlet tube (12) over the central area of the shaft (3).

The outlet tubes or lines (13, 15) for solid residues (less dense and denser solids) may be joined so as to extract the remaining water which is still present in the residues. The water extracted is recycled again at the beginning of the process.

The process also comprises a step or sub-process of forced cleaning (17) of the filtering elements (4), as showed in figure 5. This cleaning is carried out by means of a device based on the energy supplied by a hydro-pneumatic accumulator (not shown) at a pressure of 14 bars (1,4 MPa). Said device automatically and controllably acts through a programmable logic controller (PLC) (18) and a control device (16). If the pressure difference between the inlet pressure (Pe) of the fluid entering into the system (1) and the outlet pressure (Ps) of the purified fluid exceeds a value of 12 bars (1,2 MPa), the forced cleaning step of the filtering elements (4) is activated.

### Reference List

1: combined system of filtering and hydrodynamic cavitation of the invention
2: container.
   2a: upper torispherical head.
   2b: lower torispherical head.
3: rotational tubular hollow shaft or axis.
4: filtering elements.
   4a: upper filtering disc.
   4b: lower filtering disc.
   4c: metallic coating.
   4d: blades.
5: supporting core.
   5a: core channels.
6: spacer.
7: rotary seal.
8: bearing.
   8a: ball bearing.
9: mechanical seal.
10: protector.
11: feeding tube for the fluid to be purified.
12: outlet tube for the purified fluid;
13: outlet tube for heavy solids or sludge.
14: discharge tube.
15: evacuation tube for light solids.

## Claims

1. Combined system (1) of filtering and hydrodynamic cavitation for purifying an aqueous fluid, comprising a container (2), filtering elements (4), a feeding tube (11) for the fluid to be purified, an outlet tube (12) for the purified fluid, outlet tubes for light solids (15), outlet tube for heavy solids (13) and a discharge tube (14) for the system, **characterized in that**:
- the container (2) is a hollow cylindrical body which is limited by torispherical heads, an upper one (2a) and a lower one (2b), said container being configured for housing the elements in charge of subjecting the fluid to the filtering and hydrodynamic cavitation processes,
- said container (2) is axially crossed by a rotational tubular hollow shaft (3), which is configured for supporting the filtering elements (4) and making them rotate and allowing the fluid to go into the inner diameter of the shaft from the filtering elements (4) to the outlet tube (12),
- each filtering element (4) is formed by two filtering discs, an upper disc (4a) and a lower disc (4b), which are coaxially arranged around the shaft (3) and faced each other to conform a cavity,
- the surface of each filtering element (4) is covered by a metallic coating (4c) which is provided with cavities and, also, at the upper face thereof, with blades (4d);
- a supporting annular core (5) is mounted over the outer diameter of the shaft (3) and is configured for receiving and supporting the filtering elements (4), coupling them to the shaft (3); said core (5) being provided with channels (5a) for the flow of fluid from the filtering elements (4) to the shaft (3);
- around the outer diameter of the shaft (3), between adjoining filtering elements (4), a spacer (6) is mounted being configured for keeping the filtering elements separated and preventing solid particle deposition;
- above the upper torispherical head (2a) of the container (2) there is a rotary seal (7), which provides the system with tightness, and
- there are bearings (8, 8a) arranged which provide the shaft (3) with support.

2. Continuous process for an aqueous fluid purification using the combined system of filtering and hydrodynamic cavitation as defined in claim 1, **characterized in that** it comprises:
- tangentially introducing the fluid to be purified into the system (1), said fluid featuring an inlet pressure (Pe) when being introduced into the container (2) by means of the feeding tube (11);
- subjecting the fluid to filtration and hydrodynamic cavitation by means of rotating filtering elements (4) and to a step for extracting the purified fluid through an outlet (12) being arranged in the central and upper area of the system (1), through which the purified fluid comes out at an outlet pressure (Ps), and
- a control step (16) wherein the difference between the outlet pressure of the purified fluid (Ps) and the inlet pressure of the fluid (Pe) is measured by means of a control device.

3. Process for purifying an aqueous fluid according to claim 2, **characterized in that** when the difference between the outlet pressure of the purified fluid (Ps) and the pressure of the fluid coming into the system (1) exceeds a value of 12 bars, a forced cleaning (17) step is activated.

4. Process for purifying an aqueous fluid **characterized in that** it comprises a preliminary step for extracting air from the container (2).
